# FASCICULE DE BREVET EUROPEEN

(11) **EP 3 204 267 B1**
(45) Date de publication et mention de la délivrance du brevet: **11.09.2019**
(21) Numéro de dépôt: 15820051.9
(22) Date de dépôt: 08.10.2015
(51) Int. Cl.: B60S 1/08, B60S 1/48

(54) **COMMANDE D'UN SYSTÈME D'ESSUYAGE COMPORTANT UNE FONCTIONNALITÉ D'ESSUYAGE AUTOMATIQUE POUR VÉHICULE AUTOMOBILE**
STEUERUNG EINER WISCHANLAGE MIT AUTOMATISCHER WISCHFUNKTION FÜR EIN KRAFTFAHRZEUG
CONTROL OF A WIPING SYSTEM COMPRISING AN AUTOMATIC WIPING FUNCTION FOR A MOTOR VEHICLE

(30) Priorité: 08.10.2014 FR 1402268
(43) Date de publication de la demande: 16.08.2017
(73) Titulaire: Valeo Systèmes d'Essuyage, 78320 Le Mesnil Saint Denis (FR)
(72) Inventeur: PEROT, Etienne, F-94046 Créteil Cedex (FR)
(74) Mandataire: Valeo Systèmes d'Essuyage
(86) Numéro de dépôt international: PCT/EP2015/073302
(87) Numéro de publication internationale: WO 2016/055590

(56) Documents cités:
- FR-A1- 2 901 218
- US-A1- 2006 006 826
- US-A1- 2008 157 704

## Description

L'invention concerne de manière générale le domaine des véhicules automobiles. Plus particulièrement, l'invention s'intéresse aux systèmes d'essuyage automatique équipant à ce jour de nombreux véhicules.

De tels systèmes d'essuyage automatique permettent, lorsqu'ils sont activés, de détecter la pluie sur un pare-brise de véhicule en vue de déclencher automatiquement le balayage du pare-brise par au moins un balai d'essuyage.

La détection de la pluie est généralement effectuée en ayant recours à un capteur de pluie, et/ou à une caméra, comme décrit notamment dans le document FR 2 901 218, au nom de la Demanderesse. Le cadencement du balayage est de préférence variable avec l'intensité de la pluie. Ainsi, la vision pour le conducteur est en permanence optimale, et ce dernier peut en outre rester concentré sur la conduite de son véhicule.

Néanmoins, à l'usage, ces systèmes d'essuyage automatique s'avèrent souvent inadaptés par rapport à la perception que peut avoir chaque conducteur du moment où un balayage devrait effectivement être déclenché ou arrêté, et/ou de la cadence imposée au balayage.

Ainsi, certains conducteurs vont considérer que le balayage se déclenche trop rapidement par rapport à la quantité de pluie, alors que d'autres vont au contraire désirer un déclenchement plus rapide selon les situations.

Certes, la fonction d'essuyage automatique peut être également annulée et remplacée par un régime de fonctionnement normal, c'est-à-dire un fonctionnement continuel ou à intervalles. Ceci se fait par l'actionnement manuel d'une commande de type manette prévue dans l'environnement du volant du véhicule. Le conducteur qui n'est pas satisfait par le système d'essuyage automatique peut donc à tout moment reprendre les commandes des essuie-glaces.

D'autres solutions, comme décrit dans le document US 2006/006826 A1, consistent à prévoir un bouton de réglage de la sensibilité du système d'essuyage automatique, en particulier du seuil de déclenchement et du temps entre les balayages. Le nombre de réglages possibles reste néanmoins limité, et ces solutions restent ainsi inadaptées pour satisfaire un large panel de conducteurs.

Globalement, les conducteurs peuvent ressentir une frustration par rapport à l'usage qu'ils peuvent faire en pratique de leur système d'essuyage automatique.

La présente invention a pour but de pallier les limitations des solutions existantes.

Pour ce faire, la présente invention a pour objet un procédé de commande d'un système d'essuyage pour véhicule automobile, ledit système d'essuyage comportant un détecteur de pluie apte à commander l'asservissement automatique d'au moins un essuie-glace en cas de pluie dans une fonctionnalité dite d'essuyage automatique, et un organe de contrôle manuel apte à commander ledit au moins un essuie-glace dans une fonctionnalité dite de balayage manuel, le procédé étant caractérisé en ce que la fonctionnalité d'essuyage automatique est associée à un seuil de déclenchement et/ou à une vitesse de balayage auto adaptatifs dont l'ajustement est fonction d'une détection, lorsque la fonctionnalité d'essuyage automatique est activée, d'une commande issue de l'organe de contrôle manuel pour un déclenchement ou un arrêt du balayage.

L'invention a également pour objet un système de commande d'un système d'essuyage pour véhicule automobile, ledit système d'essuyage comportant un détecteur de pluie apte à commander l'asservissement automatique d'au moins un essuie-glace en cas de pluie dans une fonctionnalité dite d'essuyage automatique, et un organe de contrôle manuel apte à commander ledit au moins un essuie-glace dans une fonctionnalité dite de balayage manuel, le système de commande étant caractérisé en ce qu'il comporte des moyens aptes à associer la fonctionnalité d'essuyage automatique à un seuil de déclenchement et/ou à une vitesse de balayage auto adaptatifs dont l'ajustement est fonction d'une détection, lorsque la fonctionnalité d'essuyage automatique est activée, d'une commande issue de l'organe de contrôle manuel pour un déclenchement ou un arrêt du balayage.

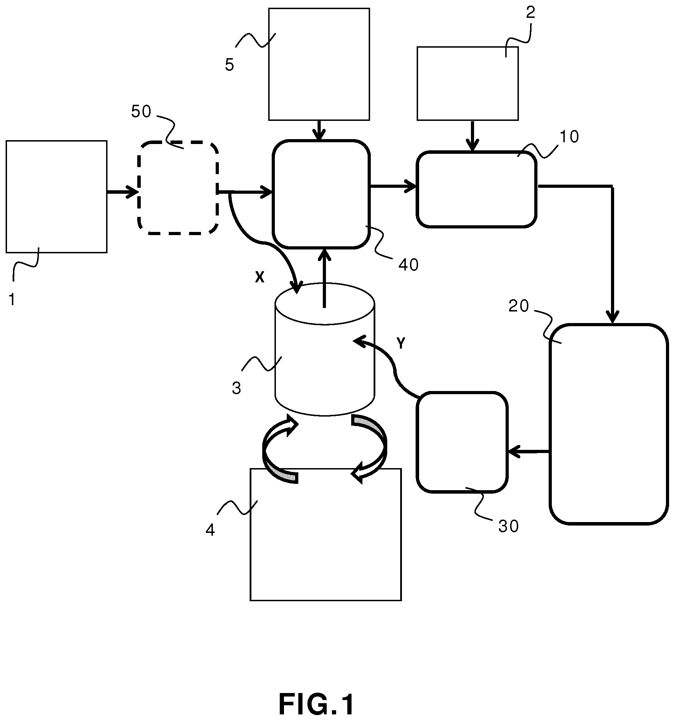

L'invention va à présent être décrite en référence à la figure 1 qui illustre schématiquement le fonctionnement d'un système de commande selon l'invention. Sur cette figure, les éléments en traits fins représentent des composantes du système d'essuyage et du système de commande, alors que les éléments en traits épais montrent des étapes mises en oeuvre conformément à l'invention. Les éléments en traits interrompus montrent des étapes optionnelles.

Un système d'essuyage pour véhicule automobile sur lequel le procédé selon l'invention pourra être mis en oeuvre comporte essentiellement :
- d'une part, un détecteur 1 de pluie apte à commander l'asservissement automatique d'au moins un essuie-glace (non représenté) en cas de pluie dans une fonctionnalité dite d'essuyage automatique ; et
- d'autre part, un organe 2 de contrôle manuel apte à commander l'essuie-glace dans une fonctionnalité dite de balayage manuel.

L'organe 2 de contrôle est typiquement une manette dont l'actionnement par le conducteur permet d'activer le balayage au moment où le conducteur le juge opportun. La manette permet aussi de sélectionner entre plusieurs modes de balayage (balayage intermittent ou continu) et entre deux ou trois vitesses de balayage, selon les besoins du conducteur. L'organe 2 de contrôle permet également d'arrêter le balayage du système d'essuyage, que ce dernier ait été déclenché automatiquement ou manuellement. Enfin, l'actionnement de l'organe 2 de contrôle prévaut toujours sur la fonctionnalité de balayage automatique. Cela signifie entre autres que le balayage peut toujours être actionné manuellement par le conducteur, même si le détecteur de pluie n'a pas détecté une quantité suffisante de pluie, ou à l'inverse, qu'un balayage déclenché automatiquement peut toujours être arrêté manuellement lorsque le conducteur ne le juge pas utile.

Comme cela a été expliqué ci-avant, la fonctionnalité d'essuyage automatique est associée à un seuil de déclenchement et à au moins une vitesse de balayage. Dans les systèmes actuels, le seuil de déclenchement est prédéterminé, éventuellement après un réglage de sensibilité possible, et est fixé une fois pour toutes. Pour que le balayage ait effectivement lieu automatiquement, il faut d'une part, que cette fonctionnalité soit activée, et d'autre part, que le détecteur 1 de pluie estime avoir détecté une quantité suffisante de pluie. La vitesse de balayage est ensuite choisie, en général parmi deux ou trois vitesses possibles, là encore en fonction de la quantité de pluie détectée.

De manière différente, la présente invention propose d'améliorer la fonctionnalité d'essuyage automatique en l'associant à un seuil de déclenchement et/ou à une vitesse de balayage qui sont auto adaptatifs, et dont l'ajustement est fonction d'une détection, lorsque la fonctionnalité d'essuyage automatique est activée, de toute commande issue de l'organe 2 de contrôle manuel.

Lorsque le véhicule sort de l'usine, la fonctionnalité d'essuyage automatique va être associée à un seuil de déclenchement initial et des vitesses initiales de balayage. Ces données initiales sont référencées X sur la figure 1.

Lors des toutes premières utilisations de la fonctionnalité de balayage automatique, le système de commande selon l'invention va ensuite intégrer les préférences du conducteur en prenant en compte la façon dont il actionne manuellement l'organe 2 de contrôle. En appliquant un algorithme d'apprentissage, le système va ainsi s'auto corriger, notamment s'il se rend compte que le conducteur active généralement manuellement le balayage alors que le balayage automatique ne s'est pas encore déclenché (situation correspondant au cas où le seuil de déclenchement initial est trop haut pour le conducteur), ou bien que le conducteur a tendance à arrêter manuellement un balayage qui s'est déclenché automatiquement (situation correspondant au cas où le seuil de déclenchement initial est trop bas pour le conducteur).

Ainsi, à titre d'exemple, le seuil de déclenchement est augmenté si la commande issue de l'organe 2 de contrôle manuel correspond à un déclenchement manuel du balayage alors qu'un déclenchement automatique n'est pas encore intervenu, alors que le seuil de déclenchement est diminué si la commande issue de l'organe 2 de contrôle manuel correspond à un arrêt manuel du balayage alors qu'un déclenchement automatique est déjà intervenu.

Selon le même principe, le système de commande peut également prendre en compte les vitesses de balayage sélectionnées par le conducteur dans différentes situations de pluie et ajuster la vitesse de balayage au cas par cas en fonction des préférences du conducteur. En d'autres termes, la vitesse de balayage associée au mode de balayage automatique est ajustée en fonction d'une commande issue de l'organe 2 de contrôle manuel relative à une sélection d'une vitesse prédéfinie. Ici encore, on utilise un algorithme d'apprentissage. Les données issues du comportement du conducteur sont référencées Y sur la figure 1. L'algorithme d'apprentissage permet de trouver la fonction qui permet d'ajuster les données initiales X pour qu'elles correspondent au mieux aux données Y.

La figure 1 part de l'hypothèse dans laquelle la fonctionnalité de balayage automatique est activée, ce qui signifie que le détecteur 2 de pluie est apte à détecter la pluie tombant sur le pare-brise. Le procédé de commande selon l'invention consiste à détecter (étape 10) toute commande issue de l'organe 2 de contrôle.

Lorsque la commande issue de l'organe 2 de contrôle montre que la fonctionnalité de balayage automatique n'est pas en phase avec les souhaits du conducteur (étape 20), en particulier :
- que le seuil de déclenchement associé à la fonctionnalité de balayage automatique lorsque le conducteur a déclenché manuellement le balayage n'était pas encore atteint ; ou
- que le conducteur a commandé manuellement l'arrêt du balayage alors que le seuil de déclenchement était atteint ; et/ou
- que le conducteur a commandé manuellement une modification du mode et/ou de la vitesse de balayage,
le système va enregistrer (étape 30) cet évènement dans une base 3 de données. Un algorithme 4 d'apprentissage est alors utilisé pour corriger le seuil de déclenchement initial (en l'augmentant ou en le réduisant selon les cas) ou pour ajuster la vitesse de balayage. Les ajustements sont enregistrés dans la base 3 de données. Pour les situations futures, le système de commande est ainsi apte à utiliser (étape 40) un seuil de déclenchement et/ou une vitesse de balayage associés à la fonctionnalité de balayage automatique en parfaite adéquation avec la perception du conducteur.

On peut prévoir en outre de conserver des ajustements propres à chaque conducteur dans une mémoire 5 dédiée, de manière à répondre efficacement aux situations où un même véhicule peut être utilisé par différents conducteurs.

Dans certains cas, la fonctionnalité de balayage automatique peut être assortie d'une fonctionnalité de nettoyage automatique, le détecteur 2 de pluie étant en outre apte à détecter un certain degré de salissure sur le pare-brise, et commander l'activation du lave-vitre en même temps que le balayage. Le système de commande peut alors réaliser avantageusement une estimation (étape 50) de la quantité de liquide de nettoyage nécessaire en fonction du degré de salissure. Le conducteur peut également de lui-même décider de déclencher le lave-vitre, généralement en utilisant le même organe 2 de contrôle que celui dédié au balayage. Dans le cadre de l'invention, on peut également prévoir un apprentissage des actions commandées par le conducteur lorsqu'il déclenche manuellement le lave-vitre (quantité de liquide de lavage demandée, instant de déclenchement par rapport au degré de salissure) de manière à ajuster en conséquence la fonctionnalité de lavage automatique.

## Revendications

1. Procédé de commande d'un système d'essuyage pour véhicule automobile, ledit système d'essuyage comportant un détecteur (1) de pluie apte à commander l'asservissement automatique d'au moins un essuie-glace en cas de pluie dans une fonctionnalité dite d'essuyage automatique, et un organe (2) de contrôle manuel apte à commander ledit au moins un essuie-glace dans une fonctionnalité dite de balayage manuel, le procédé étant **caractérisé en ce que** la fonctionnalité d'essuyage automatique est associée à un seuil de déclenchement et/ou à une vitesse de balayage auto adaptatifs dont l'ajustement est fonction d'une détection, lorsque la fonctionnalité d'essuyage automatique est activée, d'une commande issue de l'organe (2) de contrôle manuel pour un déclenchement ou un arrêt du balayage.

2. Procédé de commande selon la revendication 1, **caractérisé en ce que** ledit seuil de déclenchement est augmenté si la commande issue de l'organe (1) de contrôle manuel correspond à un déclenchement manuel du balayage alors qu'un déclenchement automatique n'est pas encore intervenu.

3. Procédé de commande selon la revendication 1, **caractérisé en ce que** ledit seuil de déclenchement est diminué si la commande issue de l'organe (2) de contrôle manuel correspond à un arrêt manuel du balayage alors qu'un déclenchement automatique est déjà intervenu.

4. Procédé de commande selon l'une quelconque des revendications précédentes, **caractérisé en ce que** ladite vitesse de balayage est ajustée en fonction d'une commande issue de l'organe (2) de contrôle manuel relative à une sélection d'une vitesse prédéfinie.

5. Procédé de commande selon l'une quelconque des revendications précédentes, **caractérisé en ce que**, le système d'essuyage étant associé à un système de lave-vitre fonctionnant soit dans un mode automatique de lavage, soit dans un mode manuel de lavage déclenché par ledit organe (2) de contrôle, ledit mode automatique est associé un seuil de déclenchement et/ou une quantité de liquide de lavage auto adaptatifs dont l'ajustement est fonction d'une détection, lorsque le mode automatique de lavage est activé, d'une commande issue de l'organe (2) de contrôle manuel relative au mode manuel de lavage.

6. Système de commande d'un système d'essuyage pour véhicule automobile, ledit système d'essuyage comportant un détecteur (1) de pluie apte à commander l'asservissement automatique d'au moins un essuie-glace en cas de pluie dans une fonctionnalité dite d'essuyage automatique, et un organe (2) de contrôle manuel apte à commander ledit au moins un essuie-glace dans une fonctionnalité dite de balayage manuel, le système de commande étant **caractérisé en ce qu'**il comporte des moyens (3-5) aptes à associer la fonctionnalité d'essuyage automatique à un seuil de déclenchement et/ou à une vitesse de balayage auto adaptatifs dont l'ajustement est fonction d'une détection, lorsque la fonctionnalité d'essuyage automatique est activée, d'une commande issue de l'organe (2) de contrôle manuel pour un déclenchement ou un arrêt du balayage.

7. Système de commande selon la revendication 6, **caractérisé en ce que**, le système d'essuyage étant associé à un système de lave-vitre fonctionnant soit dans un mode automatique de lavage, soit dans un mode manuel de lavage déclenché par ledit organe (2) de contrôle, lesdits moyens (3-5) sont en outre aptes à associer ledit mode automatique à un seuil de déclenchement et/ou une quantité de liquide de lavage auto adaptatifs dont l'ajustement est fonction d'une détection, lorsque le mode automatique de lavage est activé, d'une commande issue de l'organe (2) de contrôle manuel relative au mode manuel de lavage.

8. Système de commande selon l'une quelconque des revendications 6 et 7, **caractérisé en ce qu'**il comporte une mémoire (5) de données pour conserver ledit ajustement en fonction du conducteur.

## Patentansprüche

1. Verfahren zur Steuerung eines Wischsystems für ein Kraftfahrzeug, wobei das Wischsystem einen Regensensor (1), der geeignet ist, die automatische Einstellung mindestens eines Scheibenwischers im Falle von Regen in einer so genannten automatischen Wischfunktion zu steuern, und ein manuelles Steuerelement (2) umfasst, das geeignet ist, den mindestens einen Scheibenwischer in einer sogenannten manuellen Wischfunktion zu steuern, wobei das Verfahren **dadurch gekennzeichnet ist, dass** die automatische Wischfunktion einer selbst anpassenden Auslösegrenze und/oder Wischgeschwindigkeit zugeordnet sind, deren Einstellung, wenn die automatische Wischfunktion aktiviert ist, von einer Erfassung einer vom manuellen Steuerelement (2) ausgehenden Steuerung zum Auslösen oder Anhalten des Wischens abhängig ist.

2. Steuerungsverfahren nach Anspruch 1, **dadurch gekennzeichnet, dass** die Auslösegrenze angehoben wird, wenn die von dem manuellen Steuerelement (1) ausgehende Steuerung einem manuellen Auslösen des Wischens entspricht, während ein automatisches Auslösen noch nicht stattgefunden hat.

3. Steuerungsverfahren nach Anspruch 1, **dadurch gekennzeichnet, dass** die Auslösegrenze abgesenkt wird, wenn die von dem manuellen Steuerelement (2) ausgehende Steuerung einem manuellen Anhalten des Wischens entspricht, während ein automatisches Auslösen bereits stattgefunden hat.

4. Steuerungsverfahren nach einem der vorhergehenden Ansprüche, **dadurch gekennzeichnet, dass** die Wischgeschwindigkeit in Abhängigkeit von einer von dem manuellen Steuerelement (2) ausgehenden Steuerung in Bezug auf eine Auswahl einer vordefinierten Geschwindigkeit eingestellt wird.

5. Steuerungsverfahren nach einem der vorhergehenden Ansprüche, **dadurch gekennzeichnet, dass**, wobei das Wischsystem einem Scheibenwaschsystem zugeordnet ist, das entweder im automatischen Waschmodus oder in einem manuellen Waschmodus funktioniert, der von dem Steuerelement (2) ausgelöst wird, der Automatikmodus einer selbst anpassenden Auslösegrenze und/oder Waschflüssigkeitsmenge zugeordnet ist, deren Einstellung, wenn der Automatikmodus aktiviert ist, von einer Erfassung einer von dem manuellen Steuerelement (2) in Bezug auf den manuellen Waschmodus ausgehenden Steuerung abhängig ist.

6. System zur Steuerung eines Wischsystems für ein Kraftfahrzeug, wobei das Wischsystem einen Regensensor (1), der geeignet ist, die automatische Einstellung mindestens eines Scheibenwischers im Falle von Regen in einer so genannten automatischen Wischfunktion zu steuern, und ein manuelles Steuerelement (2) umfasst, das geeignet ist, den mindestens einen Scheibenwischer in einer sogenannten manuellen Wischfunktion zu steuern, wobei das Steuerungssystem **dadurch gekennzeichnet ist, dass** es Mittel (3-5) umfasst, die geeignet sind, die automatische Wischfunktion einer selbst anpassenden Auslösegrenze und/oder Wischgeschwindigkeit zuzuordnen, deren Einstellung, wenn die automatische Wischfunktion aktiviert ist, von einer Erfassung einer vom manuellen Steuerelement (2) ausgehenden Steuerung zum Auslösen oder Anhalten des Wischens abhängig ist.

7. Steuerungssystem nach Anspruch 6, **dadurch gekennzeichnet, dass**, wobei das Wischsystem einem Scheibenwaschsystem zugeordnet ist, das entweder im automatischen Waschmodus oder in einem manuellen Waschmodus funktioniert, der von dem Steuerelement (2) ausgelöst wird, die Mittel (3-5) ferner geeignet sind, den Automatikmodus einer selbst anpassenden Auslösegrenze und/oder Waschflüssigkeitsmenge zuzuordnen, deren Einstellung, wenn der Automatikmodus aktiviert ist, von einer Erfassung einer von dem manuellen Steuerelement (2) in Bezug auf den manuellen Waschmodus ausgehenden Steuerung abhängig ist.

8. Steuerungssystem nach einem der Ansprüche 6 und 7, **dadurch gekennzeichnet, dass** es einen Datenspeicher (5) umfasst, um die Einstellung je nach Fahrer beizubehalten.

## Claims

1. Method for controlling a wiping system for a motor vehicle, said wiping system including a rain detector (1) able to control the automatic driving of at least one windscreen wiper in the event of rain in what is called an automatic wiping functionality, and a manual control unit (2) able to control said at least one windscreen wiper in what is called a manual wiping functionality, the method being **characterized in that** the automatic wiping functionality is associated with a self-adaptive trigger threshold and/or wiping speed the adjustment of which depends on a detection, when the automatic wiping functionality is activated, of a command from the manual control unit (2) to trigger or to stop the wiping.

2. Control method according to Claim 1, **characterized in that** said trigger threshold is increased if the command from the manual control unit (1) corresponds to manual triggering of the wiping when automatic triggering has not yet occurred.

3. Control method according to Claim 1, **characterized in that** said trigger threshold is reduced if the command from the manual control unit (2) corresponds to a manual stoppage of the wiping when automatic triggering has already occurred.

4. Control method according to any one of the preceding claims, **characterized in that** said wiping speed is adjusted depending on a command from the manual control unit (2) in relation to a selection of a predefined speed.

5. Control method according to any one of the preceding claims, **characterized in that**, with the wiping system being associated with a window cleaning system operating either in an automatic cleaning mode or in a manual cleaning mode triggered by said control unit (2), said automatic mode is associated with a self-adaptive trigger threshold and/or amount of cleaning fluid the adjustment of which depends on a detection, when the automatic cleaning mode is activated, of a command from the manual control unit (2) in relation to the manual cleaning mode.

6. System for controlling a wiping system for a motor vehicle, said wiping system including a rain detector (1) able to control the automatic driving of at least one windscreen wiper in the event of rain in what is called an automatic wiping functionality, and a manual control unit (2) able to control said at least one windscreen wiper in what is called a manual wiping functionality, the control system being **characterized in that** it includes means (3-5) able to associate the automatic wiping functionality with a self-adaptive trigger threshold and/or wiping speed the adjustment of which depends on a detection, when the automatic wiping functionality is activated, of a command from the manual control unit (2) to trigger or to stop the wiping.

7. Control system according to Claim 6, **characterized in that**, with the wiping system being associated with a window cleaning system operating either in an automatic cleaning mode or in a manual cleaning mode triggered by said control unit (2), said means (3-5) are furthermore able to associate said automatic mode with a self-adaptive trigger threshold and/or amount of cleaning fluid the adjustment of which depends on a detection, when the automatic cleaning mode is activated, of a command from the manual control unit (2) in relation to the manual cleaning mode.

8. Control system according to either one of Claims 6 and 7, **characterized in that** it includes a data memory (5) for retaining said adjustment depending on the driver.
